Europäisches Patentamt

European Patent Office

Office européen des brevets

(19)

(11) Publication number: **0 269 353**

**A2**

(12) # EUROPEAN PATENT APPLICATION

(21) Application number: **87310142.2**

(22) Date of filing: **17.11.87**

(51) Int. Cl.⁴: **G06F 1/00**

(30) Priority: **17.11.86 US 931616**

(43) Date of publication of application:
**01.06.88 Bulletin 88/22**

(84) Designated Contracting States:
**DE ES FR GB IT NL SE**

(71) Applicant: **COMPUTER SECURITY
CORPORATION
First State Industrial Park Suite J
Wilmington Delaware 19804(US)**

(72) Inventor: **Cairns, John P.
78 Lowery Drive Woodland Apartments
Wilmington, DE 19805(US)**

(74) Representative: **Meddle, Alan Leonard
FORRESTER & BOEHMERT
Widenmayerstrasse 4/I
D-8000 München 22(DE)**

(54) **Arrangement and method for controlling access to electric and electronic devices.**

(57) An apparatus and method have elements and steps selected and arranged to require a timed, coded input for authenticating a code of characters in a set sequence for authorizing user access and having means for emitting a signal or alarm, wherein the system is initialized so as to require matching of representative signals from a decoder (115) and a counter (125) at inhibiting control cicruits (118) having an on-state and an off-state so that characters entered sequentially in timed cycles are authenticated as a correct member of a code set in a correct time cycle or disqualified as an unauthentic character.

An authentic character is a certain designated character entered in the selected time cycle.

Fig.8.

EP 0 269 353 A2

**"Arrangement and method for controlling access to electric and electronic devices"**

THIS PRESENT INVENTION relates to the protection of access to the use of an electrically powered apparatus.

Computer systems commonly involve a large number of electric and electronic devices at separated locations linked together and to a central pipeline. These electric and electronic devices are operated by signals transmitted through the system between locations which are physically remote from each other. The use of the system is intended to be restricted to those authorised to do so. A problem encountered in the operation of these computer systems is unauthorised use of the computers and particularly use with intent to steal or commit fraud. Attempts have been made to prevent this unauthorised use by employing scrambling equipment and by providing secret codes. This is often inadequate because the codes can be broken.

Security systems have been devised for preventing unauthorised access by remote control of electrical and electronic operations but the means previously provided to secure computer systems against unauthorised and improper operation have frequently been evaded.

An object of this invention is the limiting of access by a user by access control.

It is an object of this invention to provide an arrangement and method for establishing authority for the access of a user to apparatus by verifying the authenticity of an electrical or electronic signal for actuating the operation of a system.

Another object of the invention is to provide a protective arrangement which can be set to respond to specific data and can actuate means for connecting apparatus to a power source.

After start-up and initializing of an arrangement embodying the invention, a set code of integers, as for example converted to hexadecimal characters, is introduced into the arrangement, one character at a time.

The characters of the code are sequentially entered in a predetermined order in timed cycles of character entry. The number of cycles is determined by the total number of characters entered in the set code. The timing of the cycles is related to the time when information is entered at a keyboard. In one embodiment the characters are of the hexadecimal number system. The sequential entries at the keyboard lead to the transmittal of the hexadecimal characters individually to a decoder which translates each coded character to a selected output position of the decoder such as by a transfer of an output position pin from high to low. The selection of the various output positions in the decoder for the respective entered code characters is effected by the logic of the internal connections of the decoder. The output position p[ins are connected to a related individual inhibiting control circuit. The transfer of an output pin from high to low produces the output of a positive pulse which is transmitted to the respective inhibiting control circuit. The information bits provided by the entered characters of the decoding from binary coded decimal to position in the decoder are applied as pulses from the decoder.

The inhibiting control circuits which receive the information are switchable between two states. In one state the circuit will transmit a positive pulse received from the decoder, the on state. The transmittal of the positive pulse by the control circuit in the on state causes a switching within the circuit called toggling, which results in the production of a positive pulse out from the control circuit. Thus in this state the information serves to produce an output pulse from the inhibiting coded circuit.

In the off state the circuit will not transmit the positive pulse. Thus in the off-state the information from the keyboard does not produce an output from the inhibiting control circuit.

The control circuits are individually connected to receive selectively from the output of a decade counter inhibiting pulses which place the circuits in an off state or non-transmitting state. Information entered at the keyboard is stored in a delay and transmitted to a decade counter in a phase of each cycle after the translation of the respective code character which is related to the stored information. The inhibiting pulses are successively emitted from the decade counter and in the successive timed cycles, one for each cycle, in accordance with step-by-step incrementing of the counter in one step for each cycle starting from the initializing of the apparatus. This occurs prior to the transmission of a positive pulse from the decoder to the control circuits. Thus, with the initialization of the insertion of the code and with each successive entry of the sequenced characters at the keyboard, the counter transmits an inhibiting pulse to a control circuit, and then is incremented in preparation for the issuance of the next pulse.

When the positive pulse from the decoder output pin is transmitted to an inhibiting control circuit in the off state, no switching occurs and the entered character is accordingly accepted.

Thus in every cycle there is a time of decision to accept or reject the characters entered at the keyboard. The state at the time of decision of the inhibiting control circuit in the sequencer on receiving successively entered characters determines the acceptance or rejection of the character.

In a modification, the arrangement and method may actuate control means by selected data transmitted in signals in which the detection of incorrect data protects against the improper operation of a system. The control means controls the operation of electronic or electric devices. The arrangement includes means for signalling the actuation of the operation of the electronic or electric device when data inserted into the arrangement for effecting the actuation equals predetermined coded information stored in the arrangement.

A pseudo comparator is a logic element that is not specifically designated for the comparison of two BCD's but can be made to perform as it were.

A virtually memory is a logic element that is not specifically designed to contain or hold bits but can be made to perform as if it were.

The invention uses a plurality of digital pseudo comparators each of which receives reference alphanumeric coded information and input both in binary digit, or bit, form. The aplhanumeric reference information is virtually stored data in each of the respective pseudo-comparators. The combination of this information represents the correct code for signalling the actuation of the operation of the controlled device. The alphanumeric inputs are fed to the comparators from stages which convert these characters into a string of ones or zeroes called a binary coded decimal (BCD). When the binary coded decimals are equal, the pseudo comparators issue pulses which place a logical one on one input and an AND gate. The inputs to the AND gate are all then logical ones, and a positive output is transmitted to effect actuation of the operation of the electronic or electrical device.

When any pseudo comparator determines that the input is not equal to the reference binary coded decimal, an output to an OR gate generates a pulse from the OR gate which signals the incorrect data and immediately transmits the fact to suitable means for prohibiting actuation of the control means.

In one means for actuation of the operation the electronic or electric device a means for transmitting power to the device is activated by a light device known as an opto-isolator. The activating device blocks the subject apparatus and method from detection from the operated electronic or electric device.

In order that the invention may be readily understood, an embodiment thereof will now be described, by way of example, with reference ot the accompanying drawings, in which:

Figure 1 illustrates the physical arrangement of computer equipment incorporating a protective arrangement embodying the invention;

Figure 2 is a block diagram illustrating the organization and other aspects of the arrangement embodying the invention;

Figures 3A, 3B, 4A and 4B illustrate circuitry employed in the arrangement embodying the invention;

Figure 5 is a flow chart of parts of the operating procedure using flow chart symbols with English narrative descriptions;

Figure 6 is a diagram of a power supply;

Figure 7 is a graphical representations of the matched input pulses which trigger an incapacitating pulse;

Figure 8 is a block diagram illustrating the organization and other aspects of a preferred embodiment of the invention;

Figures 9A-B illustrate the circuitry of the preferred embodiment;

Figure 10 is a representative element of the preferred embodiment;

Figure 11 is a schematic diagram of a control circuit;

Figures 12A,B,C and D are diagrams of control circuits in various states;

Figure 13 is a chart illustrating the timing of the pulses in the system of Figure 2;

Figure 14 is a detail of the circuitry of this embodiment; and

Figures 15 A-B are a flow chart of the operating procedure of the preferred embodiment.

## Definitions

The following are definitions of terms as used herein:

data bus - a system for transmitting data by a group of wires forming a common bus.

comparator - a unit that compares two binary numbers telling whether the numbers are equal, one is greater than the other or vice-versa.

multi-vibrator or flip-flop - two stages coupled so that the input of each is derived from the output of the other and have two stable states which appropriate inputs and can be changed from one state to the other by signal at the input.

monostable - a multi-vibrator circuit which changes its operation from one stable state to another when supplied with an external trigger pulse.

Schmitt trigger - a one-shot multi-vibrator in which each trigger pulse produce one complete output pulse.

binary coded decimal - a representation of an alphanumeric character converted into a string of logical ones or zeroes or in a binary code which for descriptive purposes here are in four bit groups,

counter - a special kind of register made up of flip-flop circuits with one input and usually a parallel output from each flip-flop, which counts pulses arriving at the input and stores the total count in a certain code (usually binary numbers).

clock input-an input terminal on a unit typically used for receiving a timing control-clock signal, but used in some applications for a control signal or even data.

programmable - a circuit which can be set with a fixed program.

decoder - a combination building-block receiving several parallel inputs which recognizes combinations of input bits and puts out a signal when these combinations are received.

cycle - an interval of space or time in which one set of events or phenomena is completed.

character - a symbol formed by a system for representation of information. Examples are numerals and letters.

code - a set of meanings assigned to groups of bits made up of binary representations or binary states provided by a sequence of high and low voltage areas.

exclusive-OR gate - a device with two inputs of binary digital information and one output, whose output is logical one with either input is one but is logical zero if neither or both outputs are logical one.

byte - a sequence of adjacent binary digits operated as a unit.

inhibit control circuit - used as a switch has an on-state with low resistance and an off-state with high resistance and changed from one state to the other by a bias voltage applied as a pulse.

imposter character - a character of the set code entered in the incorrect time cycle.

erroneous character - a character not in the set code.

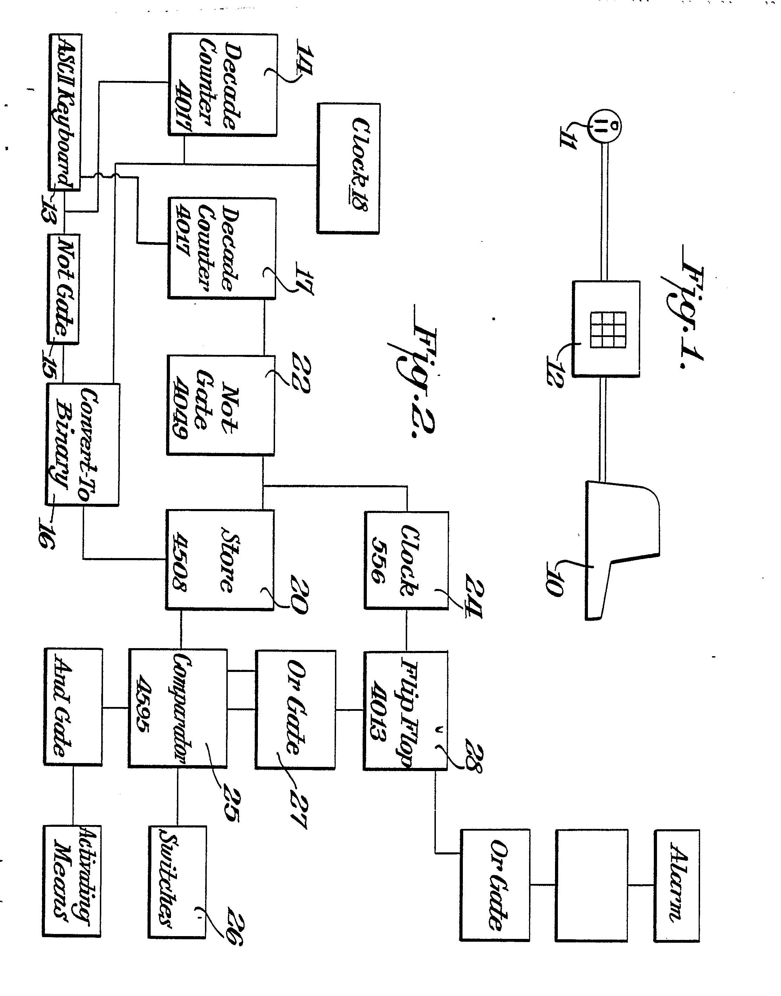

As illustrated in Figure 1 a computer control board 10 is connected to a power supply 11 through a protective apparatus interposed 12 between the control board 10 and the power supply 11. The control board 10 is representative of the electronic or electric device access to which is verified and validated in accordance with the present invention. The operation of the assembled units is subject to the control of the protective apparatus 12 which connects the control 10 the power supply 11 when appropriate signals are introduced into the protective apparatus 12, so that the power is applied to the control 10. The control 10 in turn operates appropriate computers.

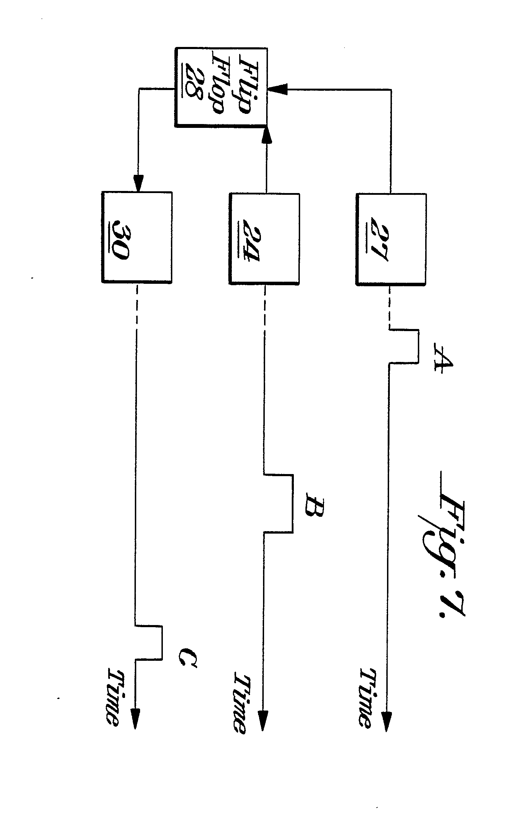

Referring to Figure 8, hexadecimal keyboard 113 and keyboard encoder 114 serve for the introduction of a set of characters making up a code, such as for example the hexadecimal code AD 12 CE 89, each character being entered in one of eight cycles. Taking as an example the first character entered in a first cycle at keyboard 113 this character is converted by encoder 114 into four binary digits, or bits, which represent the character A in binary coded form, namely 1010. These four bits are transmitted on the data bus 116 to decoder 115 and a first quad memory 117. Output terminals of decoder 115 are each hard wired to a switchable inhibiting control circuit represented here as a stage in a sequencer section 118. A selected integer, for example A, when entered on the keyboard actuates an output from the decoder 115 to one of the stages in the sequencer section 118 a zero to level transition in the clock input of the respective stage. In the sequencer stage section 118, the positive pulse transmitted from the decoder 115 causes a switching which produces a voltage output from the sequencer section unless the stage receiving the pulse is at a position which has been inhibited against switching in accordance with the arrangement of the authorized character code.

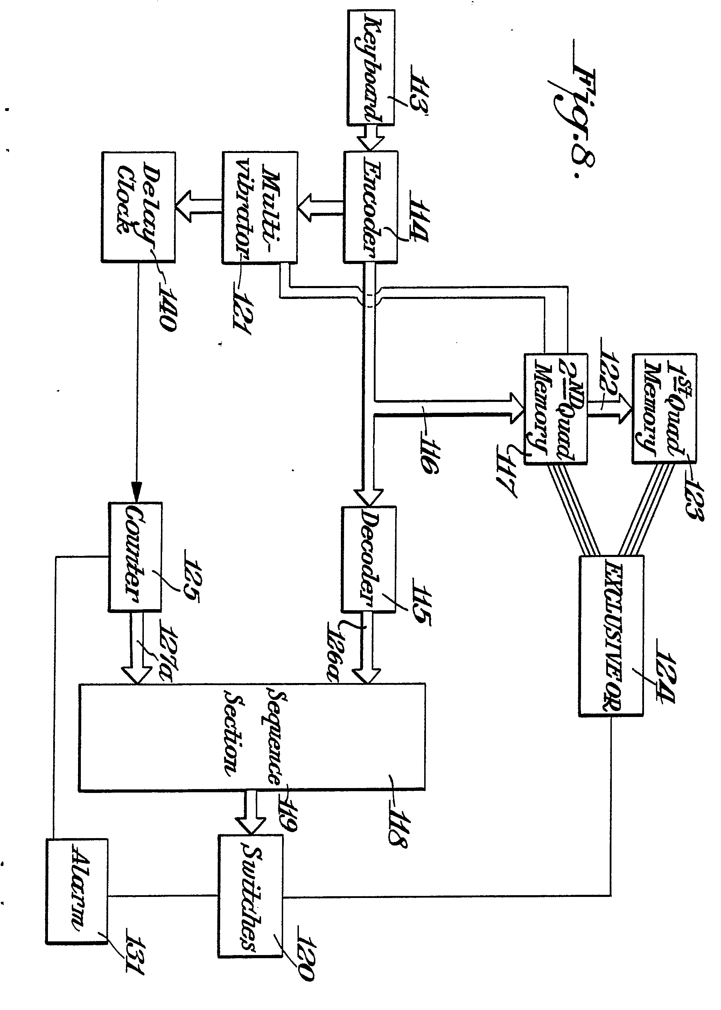

Section 118 is comprised of stages 118a-h (Figures 9A) which are respectively connected to a decade counter 125 by hardwire connections 127a-h. As described in greater detail below in connection with Figure 9A-B, the hardwriting of the terminals of the decade counter 125 to the sequencer section 118 is coordinated selectively to transfer the pulse from the counter 125 to place the receiving stage section 118 in an inhibiting state. In an inhibiting state the respective stage does not transmit a positive pulse applied to its clock pin and accordingly, the sequence of stages 118a-h in section 118 determines the reception and identification of coded characters entered into the system at the keyboard 113.

In brief, the coordinated functions of decoder 115 and decade counter 125 with the sequencer stage section 118 preselect only one of the stages to receive an inhibiting level from the decade counter 125 and character select pulse from decoder 115. Any individual stage of the sequencer section 118 receiving a character pulse from the decoder 115 and having no inhibit level will disable the system and turn on an alarm. Therefore, in the instance of an incorrect code character the sequencer 118 issues a disabling pulse on the bus to a switch 120. This disabling pulse indicates that the hexadecimal character entered at the keyboard is not the code character for which the system is designed to receive in that particular cycle.

4

Actuation of switch 120 energizes an alarm 131 and may disconnect the system.

As a bar to evasion of the required sequential entry of the specific enabling code character in the given cycle, the byte representing an entered character is also transmitted to the first quad memory 117 where it is stored prior to the entry of the next succeeding character. With the entry of the next character a pulse from the multivibrator 121 on lines 129 and 128 triggers the transfer of the stored byte on bus 122 from first quad memory 117 to second quad memory 123. The memories 117 and 123 are each connected to transmit the BCD to an exclusive OR gate 124 as described in greater detail below.

Figure 9A-B is a diagram of the circuitry of a preferred embodiment of the present invention. Figure 9A-B shows the digital equipment which is employed in carrying out this invention. The purpose of this apparatus is to prevent unauthorised operation of the controls of a device, such as a computer.

In the following description, hexadecimal characters are referred to as the code characters.

These are the key parts of the system in the commencement of a review and authorization of an enabling code for accessing into equipment through the system. The operation of the system begins with the switching on of power from a suitable source. This first sends a pulse through the system which tests the processing of signals and actuates an alarm signifying the absence of an authentic character. This is the initiation of the first cycle and the initializing of the system.

At the same time with the onset of power in the system the circuitry and the operational characteristics of the component parts are initialized by their actuation with the power. One of the functions of the initialization is the introduction of a predetermined character at the encoder 114 which is converted to an inhibit level signal into counter 125 and transferred to a selected sequencer stage, for example sequencer stage 118a. This inhibit level signal is transferred from the counter 125 on the respective connection line 127a to the inhibit level pin 1′ of stage 118a. This occurs prior to the transmission from the decoder 115.

The following is a description of an appropriate initialization step accompanying the start of use of the present apparatus for the authentification of an entered code of character for accessing purposes. A power switch, not shown, is turned on suitably applying electricity to the apparatus. In one embodiment, the encoder 114 when the power is initially applied acts to issue binary coded decimals, BCDs, of a random nature on the bus 116 to the decoder 115. In the operation of the transferring of BCD's on the bus 116 to the quad memories 117 and 123, the sequencing sends the second of these random generated BCDs to the output of the decoder 115 and the final result of this transfer is the actuation of the alarm system in the manner of operation of the apparatus explained in detail below.

The random generated character may go to any one of the outputs of the decoder 115. In whatever output position of the decoder 115 it acts to change a logical high state to a low state, the ultimate effect will be to send to one of the sequencer stages 118a-h a high pulse which will switch that stage to produce an output which triggers alarm 131 as explained below. Thus, the step of activating the electrical system produces a test of the alarm system. This serves also to create a signal that the entry of a code has been undertaken.

In the embodiment, the alarm is extinguished by the entry of the last two characters of the set code. A suitable actuating means (not shown) actuates a relay which 133 so that the outputs of sequencer stages 118a-h are set by the positive 5 volts as illustrated in Figure 9. A button 132 is closed to reset the counter 125 and set an inhibit on stage 118a. The circuit of button 132 is connected to the counter 125 at a terminal 139.

The first step after turning the power on is the introduction on the key pad 113 of any one of the code characters except the first code character as an initialization character with the result that the encoder 114 sends the resultant BCD on the bus 116 to the decoder 115 and this transmission sets output pins A-H of the decoder 115 to high, with the exception of the pin selected for the pre-setting character, which as noted above is not the first character of the code set. The decoder 115 is thus prepared for entry of the first character of the code set. The counter 125 is similarly prepared for entry of the code by closing button 132 to apply a voltage charge setting the output of the counter 125 to high on an initial output pin 0. At the same time suitable actuation such as an infrared actuated relay switch 133 sets the sequencer stages 118a-h output so that these inhibiting control circuits are prepared to undergo switching upon triggering by a pair of high inputs when in an on-state, as explained in detail below.

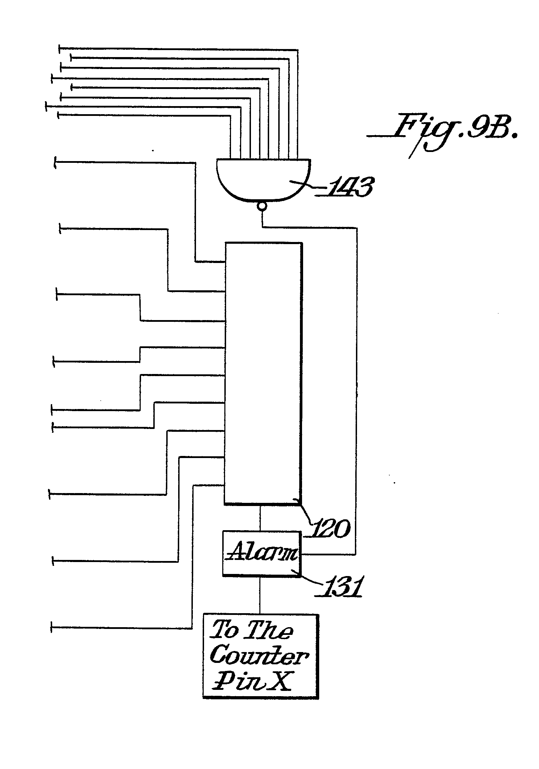

The pulse from relay switch 133 sets and resets the sequencer stages 118a-h at set pins S-1 to S-8 of the respective stages. Referring to the specific illustration of stage 118a in Figure 11, a pulse at set pin S-1 sets stage 118a with a high of +5V on a pin 137a and a low of OV on a pin 138a.

Referring again to Figure 9A-B the first character of the enabling code is entered by the accessor by activating the key on the keyboard 113 for this first character. Assume for example a character code set made up on the following hexadecimal sequence AD 12 CE 39. The first character A is entered on the keyboard and this is converted in the encoder 114 into four binary digits, or bits, which constitutes the letter A in digital form, namely 1010. These four bits are transmitted on the data bus 116 to decoder 115 and first quad memory 117. As shown in Figure 9A-B eight output pins A-H of decoder 115 are each hard wired by connections 126a-h respectively to one of the inverters 119a-h and thus to one of the sequencer stages 118a-h so that the selected integer, for example A, when entered on the keyboard 113 as the first entry of the character code actuates an output from the first position pin A of the decoder 115 and the output goes to the inverter switch or NOT gate 119a which produces a zero to level transition at the clock input pin KA of the sequencer stage 118a.

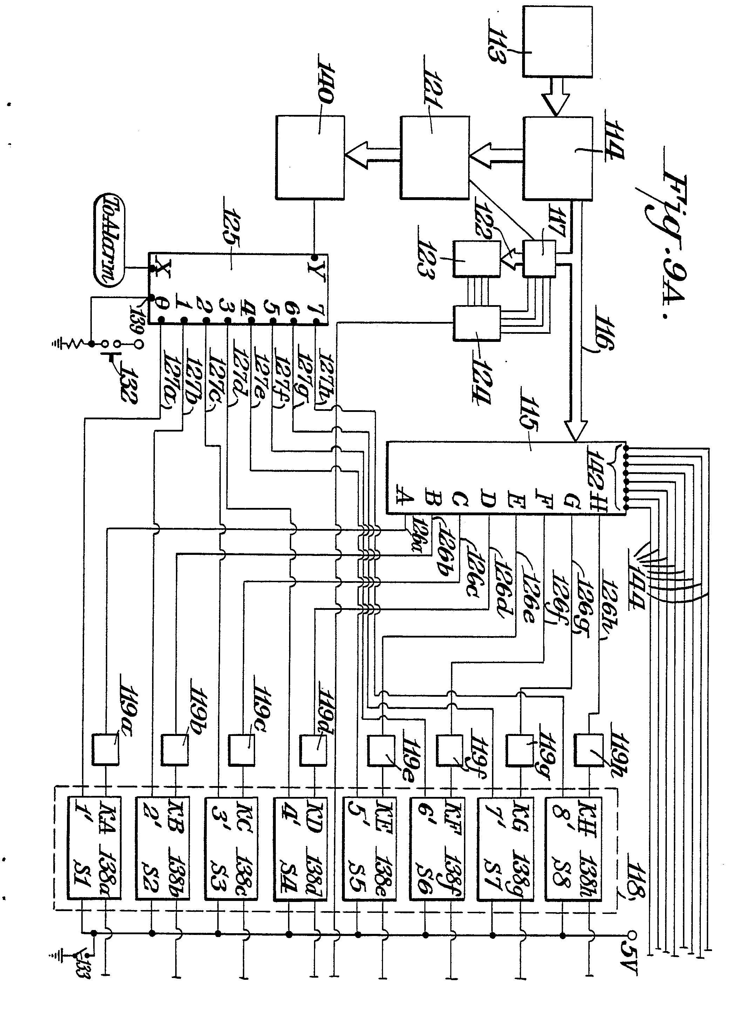

The operation of the inverter switches 119a-h may be understood from the representative illustration in Figure 10 of the inverter 119a. Inverter 119a has an input terminal 134 and a half monostable circuit made up of an R-C circuit 135 connected to the input of a gate 136. The output from the gate 136 is delivered to clock pin KA of stage 118a. The terminal 134 is connected at the A position pin of the decoder 115 and selects a pulse when the logic state of the A position pin shifts from high to low. Thus the inverter 119a illustrated in Figure 10 only forms a pulse when the A position pin shifts from high to low. The output from the inverter 119a to the clock pin KA is high. Thus the transferring of a BCD to the A position pin of the decoder 115 results in the delivery of a high logic state to the clock pin KA of sequencer stage 118a through the inverter 119a.

As noted above and referring to Figure 9A-B sequence stage 118a has received an inhibit signal from the decade counter 125 through the hardwire connection 127a to set the stage 118a at low and the stage 118a is set in the off-state. As described in greater detail below, the hardwiring of the terminals of the decade counter 125 to the sequence stages 118a-h, respectively, and the hardwiring lines 126a-h of the decoder 115 to the stages 118a-h respectively are coordinated to provide selectively in the reception and identification of coded characters entered into the system at the keyboard 113.

In brief, the coordinated functions of decoder 115 and decade counter 125 with the sequencer section 118 made up of stages 118a-h, preselect only one of the elements 118a-h to receive an enabling pulse from the decoder 115. The introduction of an imposter character will disable the system and turn on an alarm. Therefore, in the instance of the imposter character the sequencer section 118 will issue a disabling pulse.

In the described example of operation the sequencer stage 118a having received the inhibit level signal setting the inhibit pin 1' at low and the stage 118a in the off-state, the pulse transmitted from the decoder 115 does not result in switching of the voltage in the sequencer stage 118a.

Referring to the operation in general, in sequencer section 118, if the positive pulse transmitted on line from an inverter 119a-h is received by a stage in the sequencer section 118, which has not received the inhibit signal and is consequently in the turned on-state, when the pulse from the inverter 119 switches the voltage on the output from the respective stage of the sequencer section 118. With the switching of the voltage from this section 118 there is transmitted to the switch 120 an indication that the hexadecimal character entered at the keyboard is not the code character for which the system is designed by is an imposter character and is incorrect in that cycle.

The operation of the system in processing a character entry to verify its authenticity as a code character and establish the authority of the user can be understood from the following description of sequential steps.

At the start of the use as indicated above, the decade counter 125 is initialized so that all the stages 118a-h are high except the selected one of the stages 118a-h, which is set with low at the pin 1'-8. In this description high and low refer to voltages, (i.e. a high is t5v and a low is 'O' volts).

The ultimate result of this will be that a high at the clock pin of any of the stages 118a-h, except the one programmed for the first correct code character, results in triggering the alarm and indicating that a wrong character has been entered.

Thus, for example, numbering the stages 118a-h through in an upward direction on the schematic, when the reset of a pin ∅ is set high, pins 1 to 7 are set or remain at low. The correspondence between pins ∅-7 of counter 125 and pins 1'-8' of stage elements 118a-h being as follows:

| Counter 125 Pin | Stage Pin | Stage Element |
|---|---|---|
| ∅-high | 1' | 118a |
| 1-low | 2' | 118b |
| 2-low | 3' | 118c |
| 3-low | 4' | 118d |
| 4-low | 5' | 118e |
| 5-low | 6' | 118f |
| 6-low | 7' | 118g |
| 7-low | 8' | 118h |

The voltage of the pins ∅ to 7 counter 125 result in the following states of the respective stages 118a-h:

| Stage | Inhibit Level Pin | Voltage State |
|---|---|---|
| 118a | 1' | low |
| 118b | 2' | high |
| 118c | 3' | high |
| 118d | 4' | high |
| 118e | 5' | high |
| 118f | 6' | high |
| 118g | 7' | high |
| 118h | 8' | high |

In this state the system is prepared for the entry by an operator of the first indentifying code character for the purpose of gaining access to the computer system.

The role of the 1-of-16 decoder 115 is to receive a binary coded decimal which when translated into a corresponding output results in a change of state of an associated output pin of the decoder 115. In this embodiment eight pins A to H of the decoder 115 are the code set and are activated by BCD's from the keyboard 113 and encoder 114. These pins A-H are hardwired by connections 126a-h respectively through inverters 119a-h to clock pins KA-KH of the respective stage elements 118a-h as follows:

| Decoder 15 Output Pin in Code Positions | Sequencer Clock Pin | Sequencer Stage |
|---|---|---|
| A | KA | 118a |
| B | KB | 118b |
| C | KC | 118c |
| D | KD | 118d |
| E | KE | 118e |
| F | KF | 118f |
| G | KG | 118g |
| H | KH | 118h |

7

When actuated the selected decoder 115 output pin A-H goes from high to low. This actuates the respective inverter 119 which couples, inverts and shapes the high to low transition which occurs on the code output pin of the decoder 115 and transfers such transition to the appropriate clock input of the respective element in section 118.

Each stage 118a-h has five terminals providing pin positions as follows:

| Stage | Clock Input | Inhibit | High Output | Low Output | S-Pin |
|-------|-------------|---------|-------------|------------|-------|
| 118a | KA | 1' | 137A | 138A | S-1 |
| 118b | KB | 2' | 137B | 138B | S-2 |
| 118c | KC | 3' | 137C | 138C | S-3 |
| 118d | KD | 4' | 137D | 138D | S-4 |
| 118e | KE | 5' | 137E | 138E | S-5 |
| 118f | KF | 6' | 137F | 138F | 8-6 |
| 118g | KG | 7' | 137G | 138G | S-7 |
| 118h | KH | 8' | 137H | 138H | S-8 |

The stages 118a-h have respective output pins 137a-h and 138a-h. Also each stage 118a-h has a respective pins S-1 to S-8.

Reference is now made to Figure 11 whcih shows, as a representative element, the stage 118a with the five terminals consisting of a clock input pin KA, inhibit pin 1', two outputs 137a and 138a and a pin S-1. Output 138a is normally a high or logical one. Output 137a is normally a low or logical zero.

the stage 118a is capable of delivering a pulse "one" from the pin 137A. This occurs when the stage 118 a is switches and the pin 137A goes high with pin 138A going low, this change causing a "one" pulse to be delivered at pin 137A.

The stage 118a is switches when both the pin 1' and the clock pin KA are high. In the present example when the pin 1' is low as described above the stage element 118a is NOT switches. Whereas a clock pulse to one of the other clock pulse KB-KH would switch the respective stage 118b-h and cause an output of a high or a "one". In this embodiment the pin 137A and pin 138A change on the trailing edge of a negative pulse on the clock pin KA when pin 1' is high.

Referring to Figure 9A-B the switching of a "one" at the sequencer stage also actuates an inhibit pin X of the counter 125. Thus a "one" pulse to the switch 120 causes an inhibiting of the decade countr 125 which shuts the accessing off and thus prevents any further effort at identification, recognition and access. The alarm 131 is connected to pin X of counter 125.

The absence of a "one" pulse on the other hand maintains the accessing operation and leaves the system in condition for advancing to the reception of the next identifying character.

The preparation of the system for the next cycle is best understood by reference to delay clock 140 in Figure 8 and Figure 9A-9B.

At the same time that the data transfer from the keyboard to the counter 125 takes place a pulse is delivered to the delay clock 140. The delay in the clock 140 awaits the outcome of the processing of the entered character. If the code character has been correct then the authentication procedure is not stopped. Then it is time to move the high on the counter to the next output pin 1. After a delay of the "any key pressed pulse" from the keyboard in the clock 140, the delay clock pulse is transmitted to the input pin Y of the counter 125 to bring about the automatic incrementing through the counter 125. This incrementation with each pule received moves the high to the next adjacent pin of the counter 125.

For example, at the initialization of the apparatus described above, the resetting of the counter 125 sets counter pin 0 at high, with the other pins 107 set at low. As a result, through the line 127A this sets inhibit level pin 1' of stage 118a at low. Similarly the incrementation by the "any key pressed pulse" sets counter pin 1 at high with the other pins 0 and 207 set at low. As a result through not line 127b this in turn inhibits pin 2' of the element 118b in readiness for the next entry at the keyboard 113. When the counter 125 increments through pin 7 to the end of the code set, the logic of the operation is that all the characters have been correctly identified and the authentication has been completed.

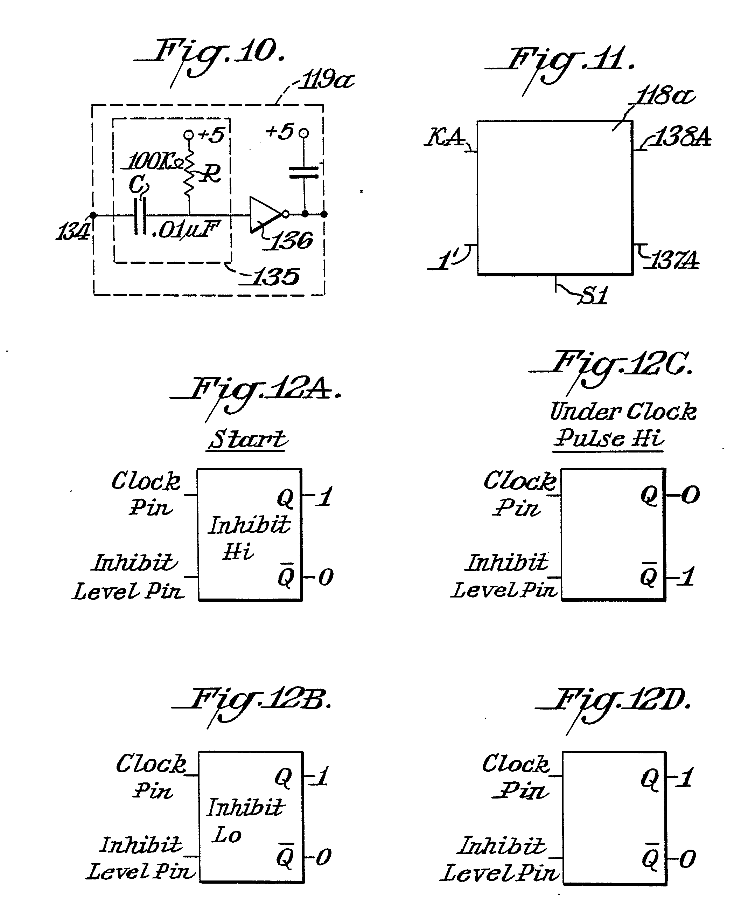

Figures 12a-12d illustrate the different effect of the reception of the clock pulse in a control circuit under the two different conditions of an inhibit level high and an inhibit level low. It will be seen that the reception of the clock pulse high in Figure 12C results in a switch in the outputs which is accompanied by an output pulse, while this does not occur in Figure 12d.

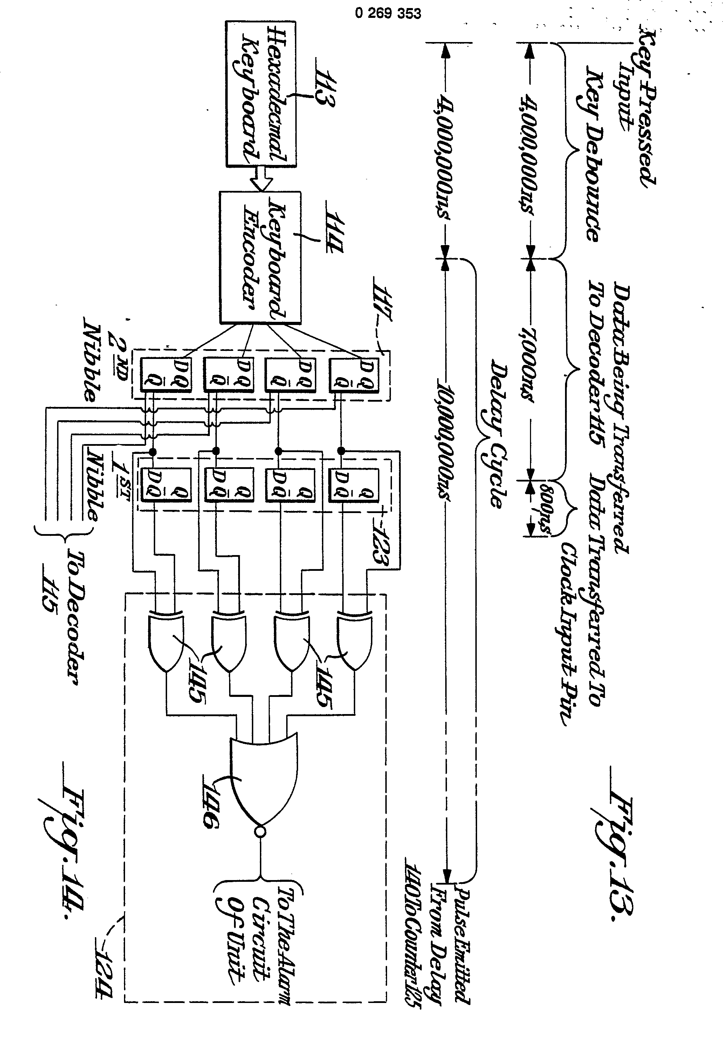

Figure 13 is a chart illustrating the timing of the pulses from the key press operation in the keyboard. Viewing the charted sequence from left to right it is seen that from the start of the key depression there is a 4 millisecond or 4,000,000 nanosecond, period before the data transfer to the decoder 115. This 4 millisecond period accommodates the mechanical action identified as key debounce. At the end of this initial period two periods start simultaneously. These are illustrated on the chart next to the right of the key debounce period. They are identified as data transfer to decoder 115 and the delay cycle.

The data is transferred to the decoder 115 in 7,000 nanoseconds and immediately the pulse transfer over the connection 126 through inverter stage 119 to sequencer stage 118 takes place in 800 nanoseconds. This completes the entry of a correct code character, and also sets off alarm if the character is an imposter.

In the delay cycle after 10,000,000 nanoseconds a pulse is emitted from the delay 140 to the Y pin of the counter 125. This increments the counter 125 and resets the system for the entry of the next character at the keyboard 113.

Because the first character introduced was the correct character and the system is not shut down, the system is, therefore, prepared to receive the introduction and authentication of the next character.

Referring again to Figure 9A-B the decoder 115 has eight output pins 142. Each of these positions represents one of the hexadecimal characters which is not in the code set. The output pins 142 are individually hardwired to a NAND gate 143 by the individual connections 144. Thus, one of the erroneous or non-code set hexadecimal characters, if entered on keyboard 113 and encoder 114 will be transferred to its respective output pin 142 of decoder 115. And changing that pin 142 from high to low transfers an input to the NAND gate 143 which transmits a signal actuating the alarm, just like the result of switching one of the sequence stages 118a-h.

In the sequence of signals the NAND gate 143 receives from the decoder a low pulse from the erroneous code character entry as received on the non-used output pins 142. The NAND gate 143 turns this to a high which becomes the actuating signal for turning on alarm 131.

As pointed out above, the processing of the BCDs through the quad memories 117 and 123 is connected to and associated with the exclusive OR gate 124 so as to produce a positive output from the gate 124 if the same character is entered at the keyboard 113 twice in succession. As illustrated by Figure 9A, the multivibrator 121 acts to shift the byte in quad memory 117 to the second quad memory 123 and also to take the later byte from the encoder 114 to the quad memory. When the same character is entered twice in succession, even if the first is an authentic code character, the repetition is necessarily an imposter and improper. The exclusive OR gate 124 is suitably connected to the alarm 131, so as to also set of the alarm 131 on the production of an output from the gate 124. To be identified as an imposter character the signals from the quad memories 117 and 123 to the NOR gate must be all the same. Thus the EXCLUSIVE OR operation is used to establish the successive entries of identical characters.

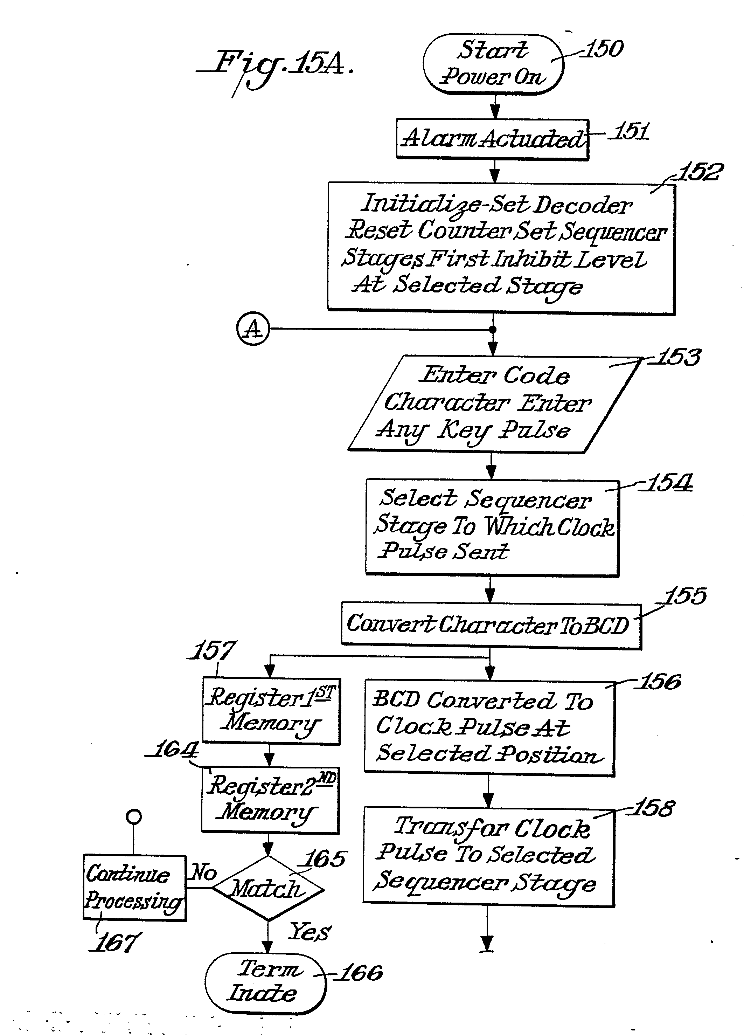

Referring to Figure 14, a detail of the circuit of the quad memories 117 and 123 and the EXCLUSIVE OR gate 145 is shown. The memories 117 and 123 are two sets of latches. On each keyboard 113 entry, the BCD is first registered in the quad memory 117 and on the next keyboard 113 entry this BCD is shifted to and registered in quad memory 123 and the seocnd BCD is registered in memory 117. The bits comprising these BCDs appear on the input of gates 145 the output of which is transferred to the NOR gate 146 so that a combination of all low pulses input to gate 146 result in an inversion to a positive signal to the alarm 131. On the other hand, a single high on any of the inputs of gate 146 inhibits a positive output from gate 146.

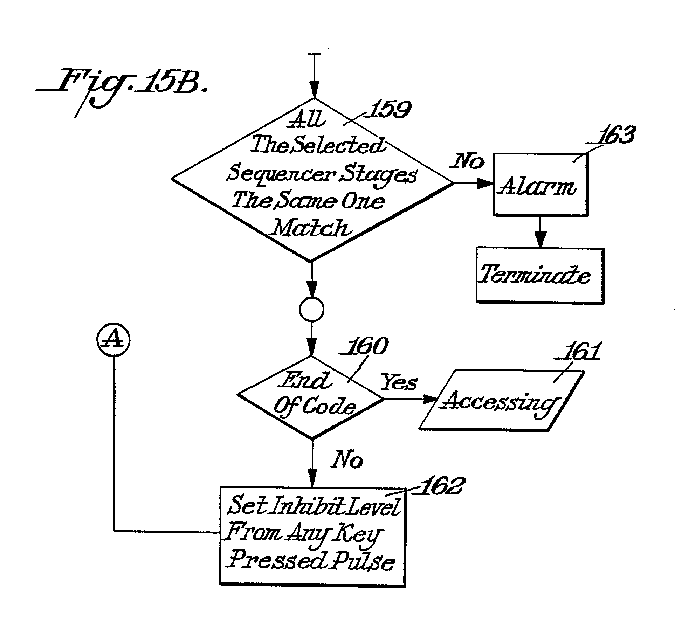

The flow chart of Figures 15A-B describes the steps to be taken when carrying out the application of the present process and apparatus. The flow chart assists in an understanding of the logic as developed here. After the apparatus is enabled as represented by oval 150, a BCD generated in the system is converted to output of the decoder 115 to test the system by actuating the alarm 131 as represented by block 151. Then the apparatus is initialized as represented by block 152. An input of one of the characters of the code set other than the first character is entered from the keyboard 113 and sets the decoder 115. The button 132 is closed to reset the counter 125 and deliver a high on pin 0 to set an inhibit on stage 118a. A suitable actuating means actuate relay switch 133 so that the outputs on the sequencer stages 118a-h are set.

As a result the sequencer stage 118a is set with the inhibit level 1' at low while the decoder 115 is set with pin A at high. Also in the sequencer stages 118b-h the inhibit level pin 2'-8' are all set at high.

The first code character is entered at the keyboard 113 in the next step represented by the parallelogram 153. In the same step an any key pressed pulse is generated. The entry of the character selects to which of the sequencer stages 118a-h the resultant clock pulse will transferred as determined by the hardwiring of the apparatus, and as represented by block 154.

The hexadecimal character is converted to a BCD in the encoder 114 as represented by block 155. The BCD is transferred to the decoder 115 and to the first quad memory 117 as represented by blocks 156 and 157 respectively. The BCD in the decoder 115 is converted to a clock pulse as represented by block 158 and the BCD in the quad memory 117 applies an output on the exclusive or gate 124. The clock pulse is next transferred to the previously selected sequencer state as represented by block 158.

As a result a judgement is made, as represented by the diamond 159 as to whether the sequencer stage selected in the initializing is the same as the sequencer stage 118a-h selected after the entry of the code character. If a match is established the processing continues. If a match is not established a signal is sent to the alarm 131 as represented by parallelogram 163.

As shown in Figures 15A-B, the judgement of the entry of an authentic code character at the proper interval results in a logic "yes" and to proceed with the authorizing procedure. The next step is another decision point represented by the diamond 160 asking the question: "is this the end of code"?

If the entry of eight authentic code characters is established, a signal is sent indicating completion of the code entry and authorization for accessing. This is represented by the parallelogram 161 indicating the accessing takes place.

If the judgement is that less than eight code characters have been entered the delayed any key pressed pulse from the delay clock 140 results in the setting of the inhibit level at low in the next adjacent sequencer stage 118b as represented by block 162.

If an additional entry is thus called for the apparatus is in condition for the entry of the next code character as represented by the parallelogram 153 and the authorizing procedure is repeated.

As shown in Figure 15A, when the code character is converted to BCD as represented by block 155, the BCD is registered in the first quad memory 117 as represented by block 157. Upon entry of the next code character the previous BCD is shifted to the second quad memory 123 as represented by block 164. Then a judgement is made at the decision point represented by diamond 165 as to whether the BCDs in memories 117 and 123 are the same. If the BCDs are identical then the processing is terminated as represented by the oval 166. If the BCDs are different processing continues as represented by block 167.

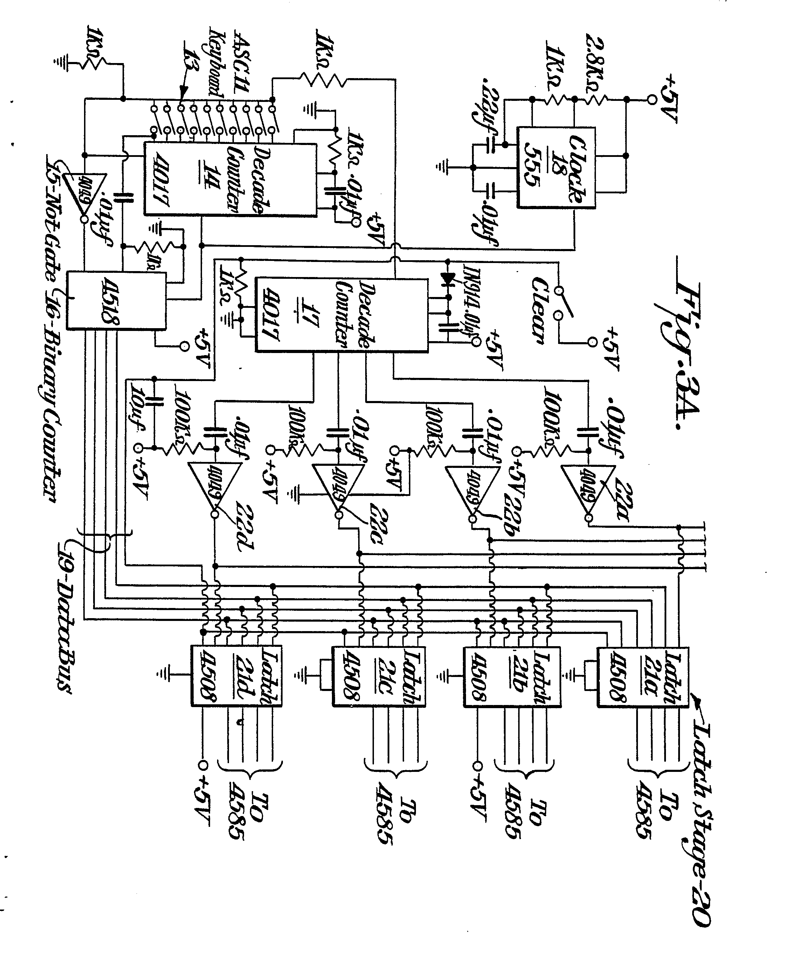

Another embodiment of the protective system in accordance with the invention will now be described with reference to Figure 2. The protective system is arranged to detect the correct signal introduced into the protective system and to actuate appropriate alarms and actions if incorrect information is introduced into the protective system. The protective system is also provided with means for detecting and announcing by an alarm in unauthorised cutting of the power from the power supply.

It is a feature of the protective system that once having been active it cannot be unplugged or have its power disconnected without activating an alarm.

Figure 2 is a general diagram of the circuitry. In this apparatus, on internal reference binary coded decimal of an alphanumeric character is compared with an input binary coded decimal. When the comparison has been made and the result indicates that the binary coded decimal of the inputs not equal to the reference binary coded decimal, an output is generated which either activates an alarm or in some other way signals the fact that the two integers are not equal when compared. Other appropriate action can be initiated. On the other hand, if the compared binary coded decimals are equal no alarm or other action result will be sounded because it will have been established that the compared inputs being equal the special code for access to the control board is being properly introduced into the system. Further, the verifying response will be utilised in the production of a signal which results in the operation of the device.

In the following detailed description, integers represent the alphanumeric characters.

Referring to Figure 2 an ASC11 keyboard 13, a decade counter 14, a NOT gate 15 and a binary counter 16 serve to input a selected integer, for example the integer 3, and convert it into four binary digits, or bits, which constitutes the numeral 3 in digital form namely 0011. The actuation of the keyboard 13 to enter also generates an "any key pressed" pulse which is applied to a second decade counter 17. In one form of this invention, the pulse involves a time period of the order of 2 microseconds or 2000 nanoseconds.

When the keyboard 13 is operated to introduce an actuating signal by the actuation of specific keys of the keyboard according to the designated sequence, the keys are actuated separately and successively in accordance with the sequence. Each selected integer when entered on the keyboard an output from the decade counter 14 to the NOT gate 15 which acts as an inverter and is turned on by the positive voltage pulse to transmit a signal to the binary counter 16.

The schedule of the operations for the conversion of the integer to the binary coded decimal is governed by a clock 18 which drives both the decade counter 14 and the binary counter 16. The clock frequency is the master frequency which times the pulses of the output from the counter 16.

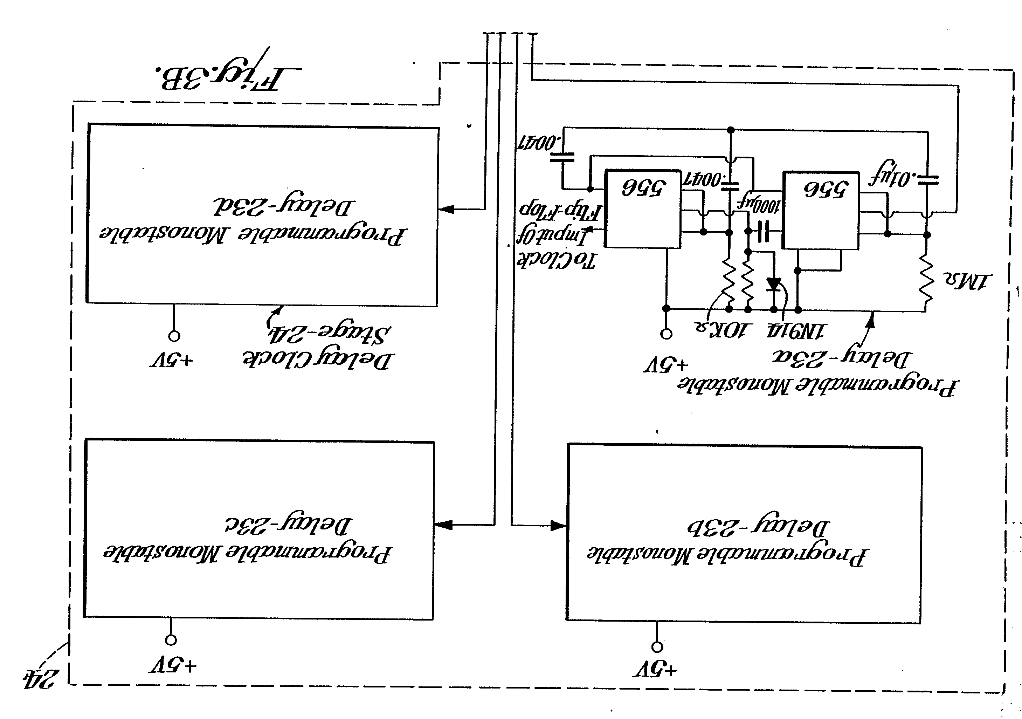

The output from gate 15 steps the counter to the number pressed on the keyboard 13 and is converted from the selected integer to a binary coded decimal consisting of 4 bits and hereinafter referred to as a nybble. The data nybble is placed on the data bus 19 from counter 16 and is transmitted to a hold and latch stage 20 wherein its stored in a selected latch of stage 20 which contains latches 21a, 21b, 21c and 21d illustrated in Figure 3A.

In the following description of Figure 2 the processing of one of the integers and its binary coded decimal is traced through the apparatus. The coded decade counter 17 is incremented successively with the entry of each integer at the keyboard 13 by an "any key pressed" pulse. A step-by-step incrementing of the output of counter 17 is transmitted to a NOT gate inverter 22 through which the incremented output from the counter 17 is fed to the stage 20. Thus, with each successive entry of the sequenced integers at the keyboard 13 the counter 17 transmits a pulse to the stage 20, while the counter 16 converts the entered integer to a binary coded decimal which is transmitted by the data base 19 to the latch stage 20 where it is stored.

Thus each time an integer is entered from the keyboard 13, the binary decimal equivalent is placed on the data bus 19 and the binary decimal is stored in the latch stage 20. The stage 20 includes data latches 21a-21d as explained below in relation to Figure 3A. An appropriate latch 21a-d is selected by the half monostable output from the gates 22a-d also included in stage 22.

For each sequenced integer there is an output pulse from inverter 22 which transmits a leading edge to a delayed clock stage 24 connected to the inverter 22.

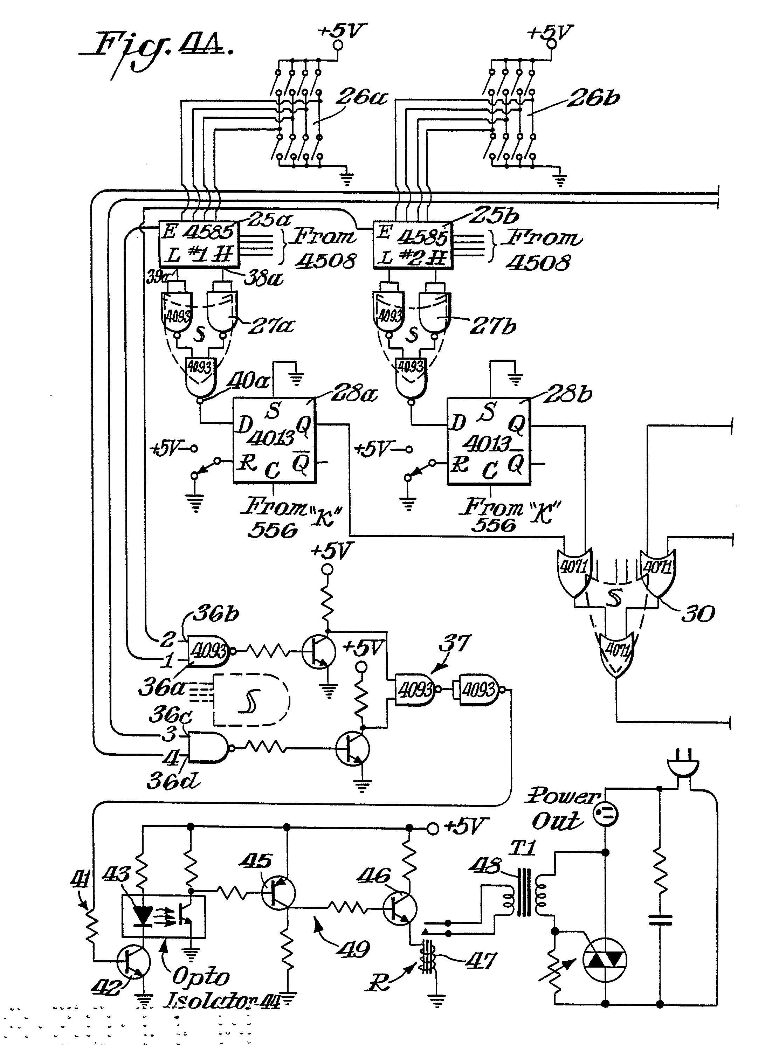

The signal from the hold and latch stage 20 is transmitted to a comparator stage 25 made up of four comparators 25a, 25b, 25c and 25d in the described embodiment illustrated in Figures 4A and 4B.

The valid integer is introduced into the comparator stage 25 in the form of binary coded decimals from switches represented in Figure 2 at 26. The data nybble made up four bits is the internal reference numeral to be matched by the integer input represented by the binary coded decimal from the hold and latch storage 20.

In this comparator stage 25 the input integer, as represented by the binary coded decimal from the latch and hold stage 20 and the internal reference integer as represented by the binary coded decimal entered from the switch 26 are compared. The comparison of the input integer and the internal reference number in the comparator stage 25 determines whether the input integer is equal to the reference numeral. Referring to Figure 2 an output signal from stage 25 is received by an activating means 112.

If the integer is different, the input integer is either larger or smaller than the reference integer. If the input integer is larger than the reference numeral an output pulse from the comparator is delivered to a Schmitt trigger 27 through the connection A. If the input integer is smaller than the reference integer, the output pulse from the comparator stage 25 proceeds to an OR gate represented at 27. If the input integer equals the reference integer an output pulse from the comparator stage 25 goes to an AND gate 37. The utilization of this pulse to the AND gate 37 to provide a signal through the isolation device is described below. The AND gate 37 is comprised of NAND gates identified by 4093 and two NPN transistors.

If the output from the comparator stage 25 indicates the integer is not equal, the pulse to OR gate is shaped to a well-defined positive output pulse to a matching circuit represented at 28. At circuit 28 there is matching to a delayed clock pulse from the delayed clock stage 24. This matching which activates invalidating action is described below.

Now referring to Figures 3A, 3B, 4A and 4B details of the protective system illustrated generally in Figure 2 may be seen. The clock 18 is an IC chip configured for a stable operation and oscillating at approximately 2Khz to drive both the decade counter 14 and the binary counter16. The clock 18 has a suitably powered power supply network from a 5 volt power source. The encoder assembly of the keyboard 13, decade counter 14, NOT gate 15 and binry counter 16 under the timing pulses of clock 18 enter the integers selected by key actuation and convert the selected integer to a binary coded decimal by a positive pulse applied to the input 34 of gate 15 from the output 31 of counter 14. The counter 14 and 16 are powered by a 5 volt source. This positive pulse on gate 15 generates a pulse on the input 32 of the binary counter 16. This input pulse is converted to a binary code in counter 16 of four bits. The four wires A,B, C and D of the data bus 19 each transmit one of the bits, the combined 4 bits on the data bus being the nybble which is fed from the counter 16 for storage to the hold and follow latch stage 20 made up of four data latches 21a-d. The latches 21a-d receive from the data bus 19 and transmit the bits of the nybble when a pulse is received from decade counter 17 as transmitted by gates 22a-d of the NOT gate stage 22.

The "any key pressed" pulse is also generated by the key pad encoder. This pulse is used to increment the decade counter 17. The four outputs from counter 17 are connected to four inputs of the inverter gates 22a-d each of which is configured as a half-monostable or edge detector. The output from these half monostables go to two sections of the unit. The first section is the programmable monostable stage 20, the pulse being directed to store pin 35 of latches 21a-d. The trailing edge section of the pulse enables the data nybble to be placed on the data bus by the binary counter 16. This data nybble is to be stored in the selected latch 21a-d. The clock 18, the counter 14, 16 and 17 and the gates 22a-d are powered by a 5 volt supply.

The other destination of the output from the half monostables 22a-d is programmable monostables 23a-d one for each bit, in the stage 24 which functions as a delayed clock pulse for the matching stage 28 made up of four flip-flop circuits 28a-d. The flip-flop 28a-d matches the output of the monostables 23a-d of stage 24 with the output of comparator 25. A further description of this matching is set forth below.

The respective valid internal reference numbers are set in the comparators 25a-d by entry from the respective sets of feed switches 26a-d. The feed switches 26a-d are similar in construction and only that for switches 26a will be described, but the description will apply in all respect to the structure of and processing from feed switches 26a, c and d.

An internal reference numeral of the valid sequence is entered into comparator 25a from feed switch 26a by punching the binary coded decimal for the reference numeral into the signal pulse, single throw dual in line switch terminals making up the feed switch 26a. The reference number is stored in the comparator 25a for comparison with the integer entered from the keyboard 13 and stored in the latch 21a. Comparator 25a is a four bit magnitude comparison circuit receiving the binary coded decimal from the latch 21a on the data bus 19.

The comparison of the reference numeral and the keyboard entered integer in the comparator 25a involves logic which asks whether the compared reference number and integer are equal or the entered integer is greater than the reference number, or the entered integer is less than the reference number. Thus three results are possible. If the reference number and integer are equal the comparator 25a transmits a logical one to input 36a of AND gate 37. If the entered integer is greater than the reference number the comparator 25 applies a positive pulse to the high input 38a of OR gate 27a. If the entered integer is less than the reference number, the comparator 25a applies a positive pulse to the low input 39a. The application of a positive pulse to either the high input 38a or the low input 39a results in an output pulse from the output 40a of the OR gate 27a embodied herein as a Schmitt trigger. The output signal from output 40a is fed to the flip-flop 28a. The delayed clock pulse from monostable 23a is matched with the output pulse from OR gate 27a and if the compared binary coded decimals are not equal a pulse is fed to the pulse conditioning circuit 30.

With each integer entered at the keyboard 13 and fed through the inverter 22a a delayed clock pulse is fed from delay 23a to the flip-flop 28a. The signal of the delayed clock pulse at flip-flop 28a produces an output from flip-flop 28a to the OR gate 30 when the flip-flop has been conditioned with a one pulse from OR gate 27.

The signal from flip-flop 28a to the OR gate 30 is either a logical one pulse or a logical zero. If the flip-flop 28a has received a positive pulse from output 40a of OR gate 27a a logical one pulse is fed to gate 30 and an output from gate 30 of a logical one is transmitted as a signal to the alarm 29. Accordingly, the entry of an incorrect integer at the keyboard 13 is identified.

The clock pulse from stage 24 in general and one of the monostables 23a-d in particular must be delayed in order to permit the processing at the comparator stage 25 and in the OR gates 27a-d to occur. Referring in particular to flip-flop circuit 28a the function of the apparatus centers on the matching of the delayed clock pulse with the presence of a one at pin D of the circuit 28a. When the circuit 28a is put in a reset state the 5 volt potential applied at pin R sets output pin Q at zero and Q at one and pin D at one. If the comparison operation finds the input integer to be valid, the OR gate 27a produces a zero to the circuit 28a and the one at pin D disappears. The delayed clock pulse subsequently applied to circuit 28a lacks a matching pulse and no output from pin Q results.

The flip-flop 28a transmits a logical zero to the gate 30. Consequently, no signal from gate 30 is generated, signifying an absence of an incorrect integer entry at keyboard 13.

To the contrary, a not equal result from the comparison resulting in a positive pulse from OR gate 27a leaves the one on pin D of circuit 28a. A way to get this one across to the out pin Q is by application of the clock pulse and this is what occurs and the alarm is sounded or other appropriate invalidating action is instituted.

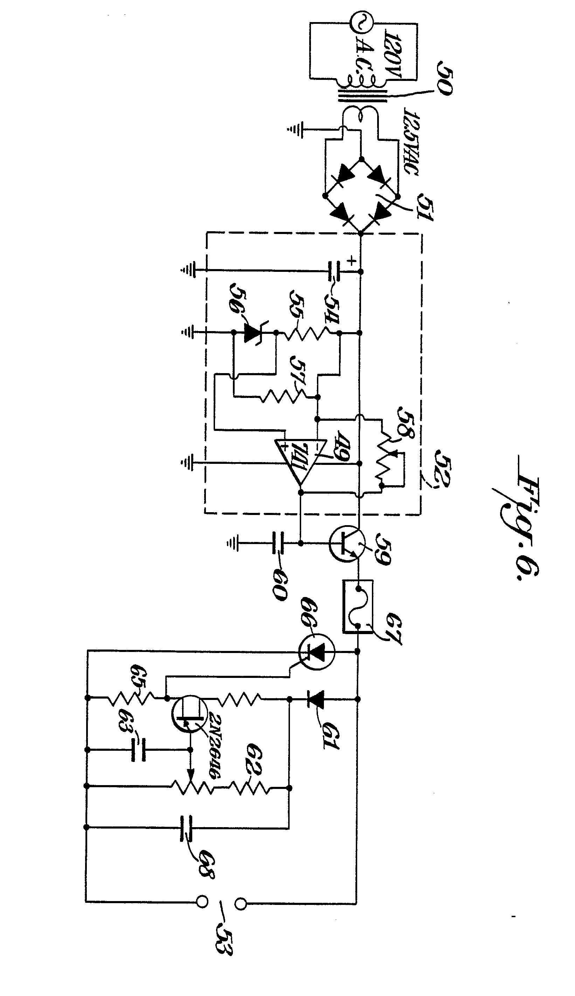

Figure 7 shows a graph of the relation to the signals of the circuit 28a-d and the output therefrom. Referring again to the processing which compares binary coded decimals at comparator 25a, it can be seen that the positive pulse A processing from gate 27a to a circuit 28a occurs at one point in time. Subsequently the delayed clock pulse B proceeds from delay 23a of the delayed clock stage. This results in the output pulse C from pin Q to gate 30.

If alarm 29 is not activated after the first integer then the next integer is entered and so forth until the entire sequence has been entered successfully. After the proper 4 digit sequence has been entered, the four inputs to the AND gate 37 will be logical ones. Under this condition a positive level output is applied to the circuit 41 and where it is applied to the base of transistor 42 which activates the light-emitting diode 43 in the opto-isolator 44. This opto-isolator 44 turns on transistor 45 in circuit 49. Transistor 45 causes base current to flow in the transistor 46 which turns on relay 57 which is connected to the secondary of a transformer 48. The resulting shorting of the secondary of 48 causes voltage and current to be applied to the power consuming device attached.

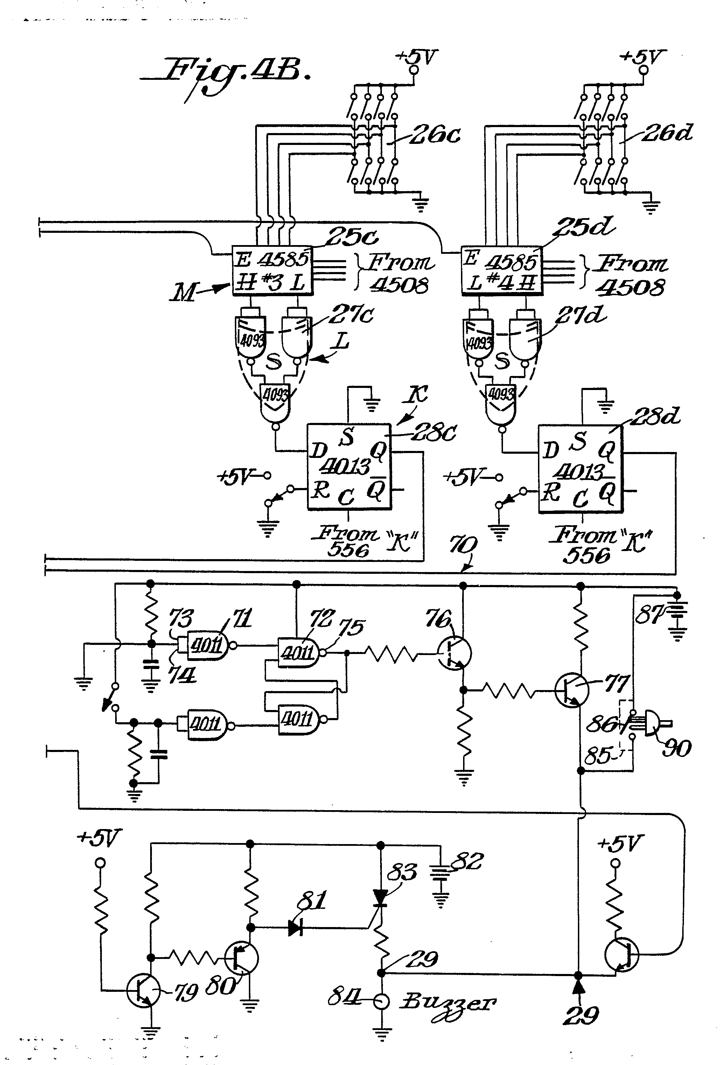

Figure 5 shows the flow chart of the system illustrated in Figure 2 through 4B. In Figure 5 the input and output steps are shown within the irregular parallelorams, the function steps are within the rectangles, whereas a logic step is shown within the diamond-shape parallelogram and the arrows indicate the flow direction.

An input step 101 of reference integers stores the coded numbers in the comparator. This function step, indicated by reference number 102, makes the numbers available for comparison. Integers selected at the keyboard in input step 103 are converted to binary decimal code in conversion step 104. The reference integers and the key inserted integers are compared in the function step 105. Having available the reference integers and the key inserted integers the comparator asks a logical question 106: "Are the integers equal or non-equal?" If the integers are not equal, i.e. the keyboard inserted integer is either greater than or less than the reference integer, the signal to the OR gate forms a pulse in step 107. The keyboard inserts a pulse which is delayed at 108 and then matched to the pulse formed at 107. The question is asked whether a pulse is formed. If there is a pulse an alarm is sounded at 109.

If the integers are equal a positive signal is generated at the input of the AND gate in step 110 to actuate the computer control indicated at step 111.

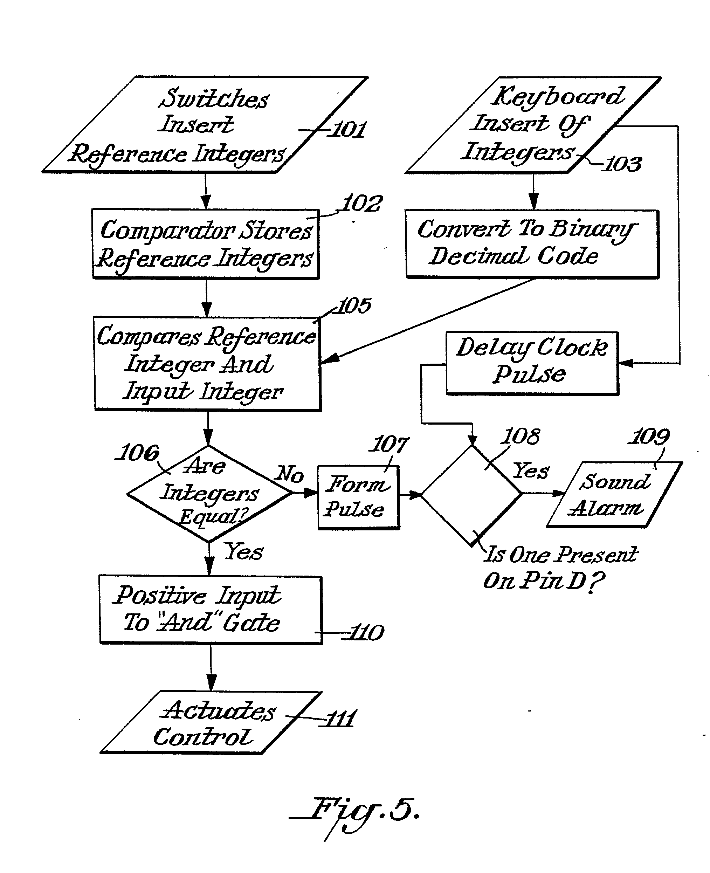

A power supply shown in Figure 6 is composed essentially of a step-down transformer 50, a full-wave bridge rectifier 51, network 52 and an output 53.

The step-down transformer 50 supplies 12.5 volts of alternating current to the rectifier 51 which applies an effective voltage of approximately 17.5 volts to the positive plate of capacitor 54 in the network 52. The capacitor 54 functions as a high pass filter removing the low frequency component of the altenating voltage. This creates a direct current and voltage which is in parallel with a series limiting resistor 55 and zener diode 56. The diode 56 and resistor 55 are connected to the input of operational amplifier 49 and feedback provided by resistor 57 and variable resistor 58. The voltage is supplied from network 52 through transistor 59 and can be accurately determined by adjusting resistor 58. The adjustment of resistor 58 acts to clamp a capacitor 60 on the base of transistor 59 at a level such that the voltage between the emitter of transistor 59 and ground is set to the required level. The output from transistor 59 is transferred to the output 53 through a crowbar circuit.

The crowbar circuit operates when the voltage and current exceed the prescribed level. Fed through diode 61 and a resistor network 62, a capacitor 63 begins to charge. If capacitor 63 is charged to a required level, unijunction transistor 64 discharges capacitor 63 through resistor 65 which triggers gate of the SCR 66. The positive gate voltage of SCR 66 causes fuse 67 to blow.

Capacitor 68 functions as an additional delay for the trip point.

The apparatus contains circuit means for preventing failure of or vitiation of the operation of the apparatus.

Referring to Figure 4B the power cable from the protective apparatus to the electronic or electric device is protected from being cut by a circuit 70. This circuit 70 uses NAND gates. Two of the NAND gates 71 are configured as inverters. Two of the NAND gates 72 function as an R-S latch. A wire running through the power cord is illustrated in Figure 4B as connected to pins 73 and 74 of the NAND gate 71 and terminating at ground. If the power cord is cut and this wire is cut or otherwise open, then a pin 75 of the AND gate 72 goes positive and provides base current to the transistor 76 of the circuit 70. This in turn gives base current to transistor 77 which in turn conducts to activate the alarm 29.

The apparatus once activated cannot be unplugged or have the power disconnected without the alarm 29 being activated. This is provided by the circuit of alarm 29 illustrated in Figure 4B. Five volts is applied to the base of the transistor 79 in the alarm circuit. This places transistor 80 into conduction and in turn connects the anode of diode 81 to ground. If the apparatus is unplugged or power is otherwise removed from transistor 79, the voltage of the battery 82 is placed on the anode of diode 81 and this in turn causes the SCR 83 to conduct to provide current to activate a buzzer alarm 84.

Another protection against unauthorised activity is provided by the connector means of the control board 10 and the protective apparatus 12. In Figure 4B, a receptacle 85 is provided for the connection of the power consuming device, represented in Figure 1 by control board 10, to the verifying apparatus,

13

represented in Figure 1 by the protective apparatus. This receptacle 85 contains an electro-mechanical switch 86 shown in Figure 4B in a line connection between the positive side of battery 87 and the buzzer alarm 84. When switch 86 closes the buzzer 84 is sounded.

In operation, the receptacle 85 receives a plus 90, shown in Figure 4B which holds switch 86 open. If and when the device as represented by control board 10 is separated from the verifying apparatus and plug 90 is removed from receptacle 85, switch 86 closes and the alarm 84 announces the disconnection.

In addition to the advantages of the present invention described above, this system features redundancy in protection against misappropriation. For example, the verified command which leads to the actuating signal works through a magnetic field which is activated by a light beam. One of the results of this is that the protective apparatus 12 is transparent to the control board 10.

When an authorized user enters the correct code, this is verified and the actuating signal is produced. If an error is made or an incorrect code entered, the audible alarm is activated. For an alarm to be terminated, an authorised individual must have access to a locked unit to reset the contained apparatus.

It will be understood that the apparatus described above can be modified with the scope of the invention. For example, the design can be expanded to involve 10 digits in the coded information. This increases the odds against accidental discovery of the correct code to 1 in 1,000,000,000.

Also it will be understood that the comparison step can be effected by the programming of an EPROM within the purpose and object of this invention.

It is a feature of this invention that the delay introduced in generating the signal indicating an incorrect input provides time to record a phone number or for initiating a trace activity.

The features disclosed in the foregoing description, in the following claims and/or in the accompanying drawings may, both separately and in any combination thereof, be material for realising the invention in diverse forms thereof.

## Claims

1. An authentication arrangement for controlling access of a user to computer apparatus protected by the arrangement, comprising keyboard means (13 or 113) for introducing characters of a preselected code in timed cycles and means (20, 25, 26 or 115) for verifying the authenticity of the introduced characters in the timed cycles, characterised by setting means (24 or 125) for generating a first signal, bistable control means (28 or 118) connected to the setting means for setting in a conductive state by the first signal and connected to the verifying means for conducting and generating a disabling signal when in the conductive state upon receipt of a second signal which is generated by the verifying means in response to the introduction of an unauthentic character.

2. An arrangement according to claim 1, wherein the bistable control means comprises a flip-flop circuit (28 or 118a-h) which is set in the conductive state by a first positive pulse and conducts to generate the disabling signal upon receipt of a positive pulse from the verifying means.

3. An arrangement according to claim 1 or 2, wherein the verifying means comprises a first memory (20) for storing a code character entered by the keyboard means, means (26) for setting a reference code character and comparator means for comparing the entered code character and the reference code character.

4. An arrangement according to claim 1 or 2, wherein the verifying means comprises decoding means (115) which receives the entered code character from the keyboard means (113) and delivers an output signal on a respective one of a plurality of outputs (126a-h), the bistable control means (118) comprises a plurality of bistable stages (118a-h) each settable to a conductive state or non-conductive state and each connected to a respective output of the decoding means, and the setting means comprises means (125) for setting a selected one of the bistable stages to the non-conductive state and the remainder of the bistable stages to the conductive state.

5. An arrangement according to any preceding claim, comprising means (117, 123, 124) for comparing the code characters introduced in successive cycles and for issuing a disabling signal if the compared code characters are the same.

6. An authentication arrangement for establishing the authority of a user for access to a protected apparatus comprising: means (113, 114) for entering binary coded decimals into a decoder (115) and translating the binary coded decimals into selected output pulses from the decoder, a plurality of inhibiting control circuits (118a-h) switchable between an on-state capable of conducting a pulse and a non-conducting off-state, means (125) for switching one of said control circuits to the off-state and the remainder of the control circuits to the on-state, and means (126a-h) for transmitting a selected output pulse from the

0 269 353

decoder to a control circuit, whereby transmitting a selected pulse to a control circuit in the on-state produces a disabling output pulse from the control circuit whereas transmitting a selected pulse to a control circuit in the off-state inhibits transmission of the pulse from the control circuit, and means having cyclic operation for introducing characters into the arrangement and converting the characters to said binary coded decimals and causing the selected output pulses to the control circuits to determine the authenticity of the introduced characters.

7. A method of detecting an unauthentic character in the processing a set of code integers in a cyclic operation in an authentication of the code made up of characters in a preselected sequence so as to establish the authority for access of a user, comprising: introducing a sequence of characters in timed cycles of a cycle operation, each code character introduction taking place in one of a sequence of timed cycles; converting each character to a BCD and decoding each BCD to a state of charge on a selected terminal position of means for decoding the BCD; transmitting the state of the charge from the terminal to one of a plurality inhibiting control circuits; and issuing a signal from said inhibiting control circuits indicative of whether an unauthentic character is present in a time cycle.

8. A method of authenticating a set of code characters establish authority for user access to protected apparatus and for disabling the apparatus on receiving an unauthentic character, comprsiing the steps of: setting a first inhibiting control circuit in an off-state of non-transmittal of an applied pulse and a plurality of additional inhibiting control circuits in an on-state of transmittal of an applied pulse; said inhibiting control circuits in an on-state being switchable to issue a disabling pulse; entering a first code character by suitable input means in a first cycle; converting the entered code character to a binary coded decimal; transferring the binary coded decimal to a decoder and converting the binary coded decimal to a pulse on a preselected output of the decoder; transferring the output pulse from the first character from the decoder to an inhibiting control circuit to produce a condition indicative of wheter an unauthentic character is present in the cycle; and during the first cycle initiating an additional inhibiting control circuit in an off-state of non-transmittal of an applied pulse and additional inhibiting control circuits in an on-state; subsequently at least once repeating the steps of entering a character in a cycle converting, transferring, decoding an output pulse and transferring the output pulse to an inhibiting control circuit.

9. A method of processing a set of code characters in an authentication of the code for authorization of a user of protected apparatus, comprising the steps of: introducing a first character of a code set in a first time cycle; converting the character to a BCD; transmitting the BCD to a decoder and producing a charge on a first output terminal; during said first time cycle transmitting a pulse to a first terminal of a counter circuit capable of scanning increment charges from terminal to terminal of said counter; transmitting pulses from the counter to a plurality of inhibiting control circuits, so as to switch one of said inhibiting control circuits to an off-state incapable of switching to produce an output pulse and the other inhibiting control circuits to an on state capable of switching to produce output pulse; transmitting an output pulse from said first output terminal on the decoder to a corresponding inhibiting control circuit; issuing a signal from said inhibiting control circuits indicative of wheter an unauthentic character is present in the time cycle; and repeating at least once the steps of introducing a character of the code set in a time cycle, converting the character to a BCD, transmitting the BCD to a decoder, transmitting a pulse to the counter circuit, transmitting pulses to the inhibiting control circuit and transmitting the output pulse to the inhibiting control circuits.

10. A method according to claim 9, comprising: entering a first code character at a keyboard; then entering a pulse in a delay circuit in entering said first code character on converting the character to a BCD transmitting the BCD to a first memory; then entering a second code character at the keyboard and on converting the second character to a BCD transmitting the BCD to the first memory and shifting the first BCD to a second memory; and transmitting the BCD's in the first and second memories to an EXCLUSIVE OR gate to determine whether the BCD in the first memory is equivalent of the BCD in the second memory by the issuance of a pule from the EXCLUSIVE OR gate.

15

**Fig.1.**

11

12

10

**Fig.2.**

ASCII Keyboard — 13

Decade Counter 4017 — 14

Decade Counter 4017 — 17

Clock 18

Not Gate — 15

Convert-To Binary — 16

Not Gate 4049 — 22

Store 4508 — 20

Clock 556 — 24

Flip Flop 4013 — 28

Or Gate — 27

Comparator 4595 — 25

Switches — 26

And Gate

Activating Means

Or Gate

Alarm

Fig. 3A.

*Latch Stage-20*

Clock 18 555

Decade Counter 17 4017

Decade Counter 14 4017

ASC.11 Keyboard 13

15-Not Gate   16-Binary Counter

19-Data Bus

22a 4049
22b 4049
22c 4049
22d 4049

Latch 21a 4508 — To 4585
Latch 21b 4508 — To 4585
Latch 21c 4508 — To 4585
Latch 21d 4508 — To 4585

4518

*Fig.3B.*

*Fig. 4A.*

0 269 353

*Fig.4B.*

Switches
Insert
Reference Integers — 101

Keyboard
Insert Of
Integers — 103

Comparator Stores
Reference Integers — 102

Convert To Binary
Decimal Code

Compares Reference
Integer And
Input Integer — 105

Delay Clock
Pulse

106 — Are
Integers
Equal?

No — Form
Pulse — 107

108
Yes

Sound
Alarm — 109

Is One Present
On Pin D?

Yes

Positive Input
To "And" Gate — 110

Actuates
Control — 111

Fig.5.

Fig. 6.

Flip
Flop
28

30

24

27

A

B

C

Time

Time

Time

Fig. 7.

Fig.8.

Keyboard — 113

Encoder — 114

Multi-vibrator — 121

Delay Clock — 140

Decoder — 115

2ND Quad Memory — 122

1ST Quad Memory — 123

116

117

Counter — 125

127a

126a

EXCLUSIVE OR — 124

Sequence Section — 118

119

Alarm — 131

Switches — 120

0 269 353

Fig.9A.

_Fig.9B._

143

120

Alarm

131

To The
Counter
Pin X

## Fig.10.

119a

100KΩ

R

C

+5

.01µF

134

136

135

+5

## Fig.11.

118a

KA

138A

1'

137A

S1

## Fig.12A.

Start

Clock
Pin

Inhibit
Level Pin

Inhibit
Hi

Q — 1

Q̄ — 0

## Fig.12C.

Under Clock
Pulse Hi

Clock
Pin

Inhibit
Level Pin

Q — 0

Q̄ — 1

## Fig.12B.

Clock
Pin

Inhibit
Level Pin

Inhibit
Lo

Q — 1

Q̄ — 0

## Fig.12D.

Clock
Pin

Inhibit
Level Pin

Q — 1

Q̄ — 0

_Key Pressed_
Input
Key Debounce     Data Being Transferred
To Decoder 115    Data Transferred To
                         Clock Input Pin

_Fig.13._

4,000,000ns      7,000ns    800ns

Delay Cycle

4,000,000ns      10,000,000ns

Pulse Emitted
From Delay
140 To Counter 125

113     114     117     123

Hexadecmal
Keyboard

Keyboard
Encoder

D Q
Q̄

Q
D Q̄

145

146

To The Alarm
Circuit
Of Unit

2^ND
Nibble

1^ST
Nibble

To Decoder
115

124

_Fig.14._

*Fig. 15A.*

```
                              ┌─────────────┐
                              │   Start     │──150
                              │  Power On   │
                              └──────┬──────┘
                                     │
                              ┌──────▼──────────┐
                              │ Alarm Actuated  │──151
                              └──────┬──────────┘
                                     │              ──152
                    ┌────────────────▼─────────────────┐
                    │   Initialize-Set Decoder         │
                    │  Reset Counter Set Sequencer     │
                    │  Stages First Inhibit Level      │
                    │    At Selected Stage             │
                    └────────────────┬─────────────────┘
          (A)─────────────────────────┤
                                      │            ──153
                    ┌─────────────────▼─────────────┐
                    │      Enter Code               │
                    │   Character Enter             │
                    │    Any Key Pulse              │
                    └─────────────────┬─────────────┘
                                      │            ──154
                    ┌─────────────────▼─────────────┐
                    │   Select Sequencer            │
                    │  Stage To Which Clock         │
                    │    Pulse Sent                 │
                    └─────────────────┬─────────────┘
                                      │            ──155
                    ┌─────────────────▼─────────────┐
                    │  Convert Character To BCD     │
                    └────────┬────────────────┬─────┘
            157              │                │
        ┌────────────┐      │         ──156   │
        │ Register 1ST│     │    ┌─────────────▼──────┐
        │  Memory    │      │    │ BCD Converted To   │
        └──────┬─────┘      │    │  Clock Pulse At    │
     164       │            │    │ Selected Position  │
        ┌──────▼─────┐      │    └─────────┬──────────┘
        │ Register 2ND│     │              │       ──158
        │  Memory    │      │    ┌─────────▼──────────┐
        └──────┬─────┘      │    │  Transfer Clock    │
      ○        │  ──165     │    │  Pulse To Selected │
  ┌────────┐No ◇──────┐     │    │ Sequencer Stage    │
  │Continue│◄──│Match │     │    └─────────┬──────────┘
  │Process-│   └──┬───┘     │              │
  │ ing    │      │ Yes     │              ▼
  └────┬───┘      │         │
   167        ┌───▼────┐
              │ Term   │──166
              │ Inate  │
              └────────┘
```

*Fig.15B.*

All
The Selected
Sequencer Stages
The Same One
Match  *159*

No → Alarm  *163*

Alarm → Terminate

End
Of Code  *160*   Yes → Accessing  *161*

No

Set Inhibit Level
From Any Key
Pressed Pulse  *162*

Ⓐ